# EUROPEAN PATENT APPLICATION

(11) **EP 4 295 660 A1**
(43) Date of publication of application: **27.12.2023**
(21) Application number: 23162357.0
(22) Date of filing: 16.03.2023
(51) Int. Cl.: A01D 34/00

(54) **CONTROLLING MOVEMENT OF A ROBOTIC GARDEN TOOL FOR DOCKING PURPOSES**

(30) Priority: 16.03.2022 US 202263320637 P
(71) Applicant: Techtronic Cordless GP, Anderson, SC 29621 (US)
(72) Inventor: LI, Shing Hin, Hong Kong (CN); CHOI, Man Ho, Hong Kong (CN)
(74) Representative: Zimmermann & Partner Patentanwälte mbB

(57) **Abstract**

A robotic garden tool may include a sensor configured to receive a wireless signal from a docking station. The robotic garden tool may also include an electronic processor configured to control the robotic garden tool to move toward the docking station by controlling the robotic garden tool to move in a first approximately straight line, and repeatedly determining a strength of the wireless signal. In response to determining that the strength of the wireless signal has begun decreasing as the robotic garden tool continues to move in the first approximately straight line, the electronic processor may control the robotic garden tool to stop moving in the first approximately straight line and turn to move in a predetermined manner to move in a second approximately straight line such that the robotic garden tool continues to move toward the docking station.

## Description

### RELATED APPLICATIONS

This application claims priority to U.S. Provisional Application No. 63/320,637, filed on March 16, 2022 (Attorney Docket No.: 206737-9039-US01), the entire contents of which are hereby incorporated by reference.

### FIELD

The present disclosure relates to robotic garden tools, particularly to methods and systems for controlling a robotic garden tool to move toward a docking station to be docked at the docking station.

### SUMMARY

One embodiment includes a robotic garden tool that may include a housing. The robotic garden tool may also include a set of wheels coupled to the housing and configured to rotate to propel the robotic garden tool on an operating surface. The robotic garden tool may also include at least one wheel motor coupled to one or more wheels of the set of wheels. The at least one wheel motor may be configured to drive rotation of the one or more wheels. The robotic garden tool may also include a sensor configured to receive a wireless signal from a docking station. The robotic garden tool may be configured to dock at the docking station. The robotic garden tool may also include an electronic processor in communication with the sensor and configured to control the robotic garden tool to move toward the docking station. The electronic processor may be configured to control the robotic garden tool to move by determining a first strength of the wireless signal while the robotic garden tool is located at a first position in an operating area. The electronic processor may be further configured to control the robotic mower to move by controlling operation of the at least one wheel motor to move the robotic garden tool in a first approximately straight line. The electronic processor may be further configured to control the robotic mower to move by repeatedly determining a second strength of the wireless signal as the robotic garden tool is moving in the first approximately straight line. The electronic processor may be further configured to control the robotic mower to move by controlling operation of the at least one wheel motor to continue to move the robotic garden tool in the first approximately straight line in response to determining that the second strength of the wireless signal is not decreasing as the robotic garden tool is moving in the first approximately straight line. The electronic processor may be further configured to control the robotic mower to move by determining that the second strength of the wireless signal has begun decreasing as the robotic garden tool continues to move in the first approximately straight line. The electronic processor may be further configured to control the robotic mower to move by, in response to determining that the second strength of the wireless signal has begun decreasing as the robotic garden tool continues to move in the first approximately straight line, controlling operation of the at least one wheel motor to stop moving the robotic garden tool in the first approximately straight line and turn the robotic garden tool to move in a predetermined manner to move in a second approximately straight line such that the robotic garden tool continues to move toward the docking station.

In addition to any combination of features described above, the electronic processor may be configured to control operation of the at least one wheel motor to turn the robotic garden tool to move in the predetermined manner to move in the second approximately straight line by: controlling operation of the at least one wheel motor to turn the robotic garden tool approximately ninety degrees in a preliminary direction along the second approximately straight line, and during movement of the robotic garden tool in the preliminary direction along the second approximately straight line, determining a third strength of the wireless signal. The electronic processor may be further configured to control operation of the at least one wheel motor to turn the robotic garden tool to move in the predetermined manner to move in the second approximately straight line by in response to determining that the third strength of the wireless signal is greater than the second strength of the wireless signal, determining that the movement of the robotic garden tool in the preliminary direction along the second approximately straight line causes the robotic garden tool to move toward the docking station, repeatedly determining the third strength of the wireless signal, and controlling operation of the at least one wheel motor to continue to move the robotic garden tool along the second approximately straight line in the preliminary direction in response to determining that the third strength of the wireless signal is not decreasing as the robotic garden tool is moving in the second approximately straight line.

In addition to any combination of features described above, the electronic processor may be configured to control operation of the at least one wheel motor to turn the robotic garden tool to move in the predetermined manner to move in the second approximately straight line by in response to determining that the third strength of the wireless signal is less than the second strength of the wireless signal, determining that the movement of the robotic garden tool in the preliminary direction along the second approximately straight line causes the robotic garden tool to move away from the docking station, controlling operation of the at least one wheel motor to make a one hundred eighty degree turn to move the robotic garden tool along the second approximately straight line in a second direction opposite to the preliminary direction, repeatedly determining the third strength of the wireless signal while the robotic garden tool is moving in the second direction along the second approximately straight line, and controlling operation of the at least one wheel motor to continue to move the robotic garden tool along the second approximately straight line in the second direction in response to determining that the third strength of the wireless signal is not decreasing as the robotic garden tool is moving in the second approximately straight line.

In addition to any combination of features described above, the electronic processor may be configured to determine that at least one of the first strength of the wireless signal and the second strength of the wireless signal is greater than a predetermined strength of wireless signal threshold, and in response to determining that the at least one of the first strength of the wireless signal and the second strength of the wireless signal is greater than the predetermined strength of wireless signal threshold, adjust an operating parameter of the robotic garden tool.

In addition to any combination of features described above, the operating parameter may include a speed at which the robotic garden tool travels through the operating area. The electronic processor may be configured to reduce the speed at which the robotic garden tool travels through the operating area in response to determining that the at least one of the first strength of the wireless signal and the second strength of the wireless signal is greater than the predetermined strength of wireless signal threshold.

In addition to any combination of features described above, the electronic processor may be configured to during operation in the operating area, determine that the robotic garden tool should return to the docking station, and in response to determining that the robotic garden tool should return to the docking station, determine the first strength of the wireless signal while the robotic garden tool is located at the first position, and control operation of the at least one wheel motor to move the robotic garden tool in the first approximately straight line. The first approximately straight line may be in a random direction.

In addition to any combination of features described above, the electronic processor may be configured to during operation in the operating area, determine that the robotic garden tool should return to the docking station, and in response to determining that the robotic garden tool should return to the docking station, control operation of the at least one wheel motor to move the robotic garden tool in an approximately circular path, repeatedly determining a third strength of the wireless signal while the robotic garden tool is moving in the approximately circular path, determine at least one of a minimum level of the third strength of the wireless signal along the approximately circular path at a second position and a maximum level of the third strength of the wireless signal along the approximately circular path at a third position, and control operation of the at least one wheel motor to at least one of (i) turn the robotic garden tool approximately ninety degrees from the third position in a second direction that is opposite a first direction in which the robotic garden tool is turning in order to move in the approximately circular path, and move the robotic garden tool in the first approximately straight line, and (ii) turn the robotic garden tool approximately ninety degrees from the second position in the first direction, and move the robotic garden tool in the first approximately straight line.

In addition to any combination of features described above, the electronic processor may be configured to during operation in the operating area, determine that the robotic garden tool should return to the docking station. In response to determining that the robotic garden tool should return to the docking station, the electronic processor may be configured to determine that the sensor is not currently receiving the wireless signal from the docking station. In response to determining that the sensor is not currently receiving the wireless signal from the docking station, the electronic processor may be configured to control operation of the at least one wheel motor to at least one of (i) move in a random approximately straight line and (ii) continue movement control of the robotic garden tool that was being implemented before the electronic processor determined that the robotic garden tool should return to the docking station, until the electronic processor determines that the sensor is receiving the wireless signal from the docking station. In response to determining that the sensor is receiving the wireless signal from the docking station, the electronic processor may be configured to determine the first strength of the wireless signal while the robotic garden tool is located at the first position, and control operation of the at least one wheel motor to move the robotic garden tool in the first approximately straight line.

In addition to any combination of features described above, the sensor may include a wireless communications receiver and the wireless signal received by the sensor includes at least one of a Wi-Fi^{™} signal and a Bluetooth^{™} signal.

Another embodiment includes a method for controlling a robotic garden tool. The method may include determining, with an electronic processor of the robotic garden tool and while the robotic garden tool is located at a first position in an operating area, a first strength of a wireless signal received by a sensor of the robotic garden tool from a docking station. The robotic garden tool may be configured to dock at the docking station. The method may further include controlling, with the electronic processor, operation of at least one wheel motor of the robotic garden tool to move the robotic garden tool in a first approximately straight line. The robotic garden tool may include a housing, a set of wheels coupled to the housing and configured to rotate to propel the robotic garden tool on an operating surface, and the at least one wheel motor coupled to one or more wheels of the set of wheels and configured to drive rotation of the one or more wheels. The method may further include repeatedly determining, with the electronic processor, a second strength of the wireless signal as the robotic garden tool is moving in the first approximately straight line. The method may further include controlling, with the electronic processor, operation of the at least one wheel motor to continue to move the robotic garden tool in the first approximately straight line in response to determining that the second strength of the wireless signal is not decreasing as the robotic garden tool is moving in the first approximately straight line. The method may further include determining, with the electronic processor, that the second strength of the wireless signal has begun decreasing as the robotic garden tool continues to move in the first approximately straight line. The method may further include, in response to determining that the second strength of the wireless signal has begun decreasing as the robotic garden tool continues to move in the first approximately straight line, controlling, with the electronic processor, operation of the at least one wheel motor to stop moving the robotic garden tool in the first approximately straight line and turn the robotic garden tool to move in a predetermined manner to move in a second approximately straight line such that the robotic garden tool continues to move toward the docking station.

In addition to any combination of features described above, controlling operation of the at least one wheel motor to turn the robotic garden tool to move in the predetermined manner to move in the second approximately straight line may include controlling, with the electronic processor, operation of the at least one wheel motor to turn the robotic garden tool approximately ninety degrees in a preliminary direction along the second approximately straight line; during movement of the robotic garden tool in the preliminary direction along the second approximately straight line, determining, with the electronic processor, a third strength of the wireless signal; and in response to determining that the third strength of the wireless signal is greater than the second strength of the wireless signal, determining, with the electronic processor, that the movement of the robotic garden tool in the preliminary direction along the second approximately straight line causes the robotic garden tool to move toward the docking station, repeatedly determining, with the electronic processor, the third strength of the wireless signal, and controlling, with the electronic processor, operation of the at least one wheel motor to continue to move the robotic garden tool along the second approximately straight line in the preliminary direction in response to determining that the third strength of the wireless signal is not decreasing as the robotic garden tool is moving in the second approximately straight line.

In addition to any combination of features described above, controlling operation of the at least one wheel motor to turn the robotic garden tool to move in the predetermined manner to move in the second approximately straight line may include in response to determining that the third strength of the wireless signal is less than the second strength of the wireless signal, determining, with the electronic processor, that the movement of the robotic garden tool in the preliminary direction along the second approximately straight line causes the robotic garden tool to move away from the docking station, controlling, with the electronic processor, operation of the at least one wheel motor to make a one hundred eighty degree turn to move the robotic garden tool along the second approximately straight line in a second direction opposite to the preliminary direction, repeatedly determining, with the electronic processor, the third strength of the wireless signal while the robotic garden tool is moving in the second direction along the second approximately straight line, and controlling, with the electronic processor, operation of the at least one wheel motor to continue to move the robotic garden tool along the second approximately straight line in the second direction in response to determining that the third strength of the wireless signal is not decreasing as the robotic garden tool is moving in the second approximately straight line.

In addition to any combination of features described above, the method may further include determining, with the electronic processor, that at least one of the first strength of the wireless signal and the second strength of the wireless signal is greater than a predetermined strength of wireless signal threshold, and in response to determining that the at least one of the first strength of the wireless signal and the second strength of the wireless signal is greater than the predetermined strength of wireless signal threshold, adjusting, with the electronic processor, an operating parameter of the robotic garden tool.

In addition to any combination of features described above, the operating parameter may include a speed at which the robotic garden tool travels through the operating area. In addition to any combination of features described above, adjusting the operating parameter may include reducing, with the electronic processor, the speed at which the robotic garden tool travels through the operating area in response to determining that the at least one of the first strength of the wireless signal and the second strength of the wireless signal is greater than the predetermined strength of wireless signal threshold.

In addition to any combination of features described above, the method may further include during operation in the operating area, determining, with the electronic processor, that the robotic garden tool should return to the docking station, and in response to determining that the robotic garden tool should return to the docking station, determining, with the electronic processor, the first strength of the wireless signal while the robotic garden tool is located at the first position, and controlling, with the electronic processor, operation of the at least one wheel motor to move the robotic garden tool in the first approximately straight line, wherein the first approximately straight line is in a random direction.

In addition to any combination of features described above, the method may further include during operation in the operating area, determining, with the electronic processor, that the robotic garden tool should return to the docking station, and in response to determining that the robotic garden tool should return to the docking station, controlling, with the electronic processor, operation of the at least one wheel motor to move the robotic garden tool in an approximately circular path, repeatedly determining, with the electronic processor, a third strength of the wireless signal while the robotic garden tool is moving in the approximately circular path, determining, with the electronic processor, at least one of a minimum level of the third strength of the wireless signal along the approximately circular path at a second position and a maximum level of the third strength of the wireless signal along the approximately circular path at a third position, and controlling, with the electronic processor, operation of the at least one wheel motor to at least one of (i) turn the robotic garden tool approximately ninety degrees from the third position in a second direction that is opposite a first direction in which the robotic garden tool is turning in order to move in the approximately circular path, and move the robotic garden tool in the first approximately straight line, and (ii) turn the robotic garden tool approximately ninety degrees from the second position in the first direction, and move the robotic garden tool in the first approximately straight line. In addition to any combination of features described above, the method may further include during operation in the operating area, determining, with the electronic processor, that the robotic garden tool should return to the docking station, and in response to determining that the robotic garden tool should return to the docking station, determining, with the electronic processor, that the sensor is not currently receiving the wireless signal from the docking station. The method may further include in response to determining that the sensor is not currently receiving the wireless signal from the docking station, controlling, with the electronic processor, operation of the at least one wheel motor to at least one of (i) move in a random approximately straight line and (ii) continue movement control of the robotic garden tool that was being implemented before the electronic processor determined that the robotic garden tool should return to the docking station, until the electronic processor determines that the sensor is receiving the wireless signal from the docking station. The method may further include in response to determining that the sensor is receiving the wireless signal from the docking station, determining, with the electronic processor, the first strength of the wireless signal while the robotic garden tool is located at the first position, and controlling, with the electronic processor, operation of the at least one wheel motor to move the robotic garden tool in the first approximately straight line.

In addition to any combination of features described above, the wireless signal received by the sensor may include at least one of a Wi-Fi^{™} signal and a Bluetooth^{™} signal.

Another embodiment includes a robotic garden tool that may include a housing and a set of wheels coupled to the housing and configured to rotate to propel the robotic garden tool on an operating surface. The robotic garden tool also may include at least one wheel motor coupled to one or more wheels of the set of wheels. The at least one wheel motor may be configured to drive rotation of the one or more wheels. The robotic garden tool also may include a sensor configured to receive a wireless signal from a docking station. The robotic garden tool may be configured to dock at the docking station. The robotic garden tool also may include an electronic processor in communication with the sensor and configured to control the robotic garden tool to move toward the docking station. The electronic processor may be configured to control the robotic garden to move by, during operation in an operating area, determining that the robotic garden tool should return to the docking station. The electronic processor may be further configured to control the robotic mower to move by, in response to determining that the robotic garden tool should return to the docking station, controlling operation of the at least one wheel motor to move the robotic garden tool in an approximately circular path. The electronic processor may be further configured to control the robotic mower to move by repeatedly determining a first strength of the wireless signal while the robotic garden tool is moving in the approximately circular path. The electronic processor may be further configured to control the robotic mower to move by determining at least one of (i) a minimum level of the first strength of the wireless signal along the approximately circular path at a first position and (ii) a maximum level of the first strength of the wireless signal along the approximately circular path at a second position. The electronic processor may be further configured to control the robotic mower to move by controlling operation of the at least one wheel motor to at least one of (i) turn the robotic garden tool approximately ninety degrees from the second position in a second direction that is opposite a first direction in which the robotic garden tool is turning in order to move in the approximately circular path, and move the robotic garden tool in a first approximately straight line, and (ii) turn the robotic garden tool approximately ninety degrees from the first position in the first direction, and move the robotic garden tool in the first approximately straight line.

In addition to any combination of features described above, the electronic processor may be configured to repeatedly determine a second strength of the wireless signal as the robotic garden tool is moving in the first approximately straight line, control operation of the at least one wheel motor to continue to move the robotic garden tool in the first approximately straight line in response to determining that the second strength of the wireless signal is not decreasing as the robotic garden tool is moving in the first approximately straight line, determine at least one of (i) that the second strength of the wireless signal has begun decreasing as the robotic garden tool continues to move in the first approximately straight line and (ii) that the second strength of the wireless signal is greater than a predetermined strength of wireless signal threshold and

**IN RESPONSE TO DETERMINING THAT AT LEAST ONE OF (I) THAT THE SECOND STRENGTH OF THE WIRELESS SIGNAL HAS BEGUN DECREASING AS THE ROBOTIC GARDEN TOOL CONTINUES TO MOVE IN THE FIRST APPROXIMATELY STRAIGHT LINE AND (II) THAT THE SECOND STRENGTH OF THE WIRELESS SIGNAL IS GREATER THAN THE PREDETERMINED STRENGTH OF WIRELESS SIGNAL THRESHOLD, ADJUSTING AT LEAST ONE OF AN OPERATING PARAMETER AND A MOVEMENT PATTERN OF THE ROBOTIC GARDEN TOOL.**

Other aspects of the disclosure will become apparent by consideration of the detailed description and accompanying drawings.

### BRIEF DESCRIPTION OF THE DRAWINGS

FIG. 1A illustrates a robotic garden tool, a docking station for the robotic garden tool, and an external device according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the docking station of FIG. 1A according to some example embodiments.
FIG. 5 illustrates a flowchart of a method that may be performed by a first electronic processor of the robotic garden tool of FIGS. 1A and 1B to control movement of the robotic garden tool toward the docking station according to some example embodiments.
FIG. 6 illustrates an example use case of the robotic garden tool shown in FIGS. 1A and 1B within an operating area according to some example embodiments.
FIG. 7A illustrates an example use case of the robotic garden tool shown in FIGS. 1A and 1B as the robotic garden tool attempts to move toward the docking station according to some example embodiments.
FIG. 7B illustrates an example graph of a received strength of a wireless signal from the docking station as the robotic garden tool shown in FIGS. 1A and 1B moves along an example path shown in FIG. 7A according to some example embodiments.
FIG. 8 illustrates another example use case of the robotic garden tool shown in FIGS. 1A and 1B as the robotic garden tool attempts to move toward the docking station according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

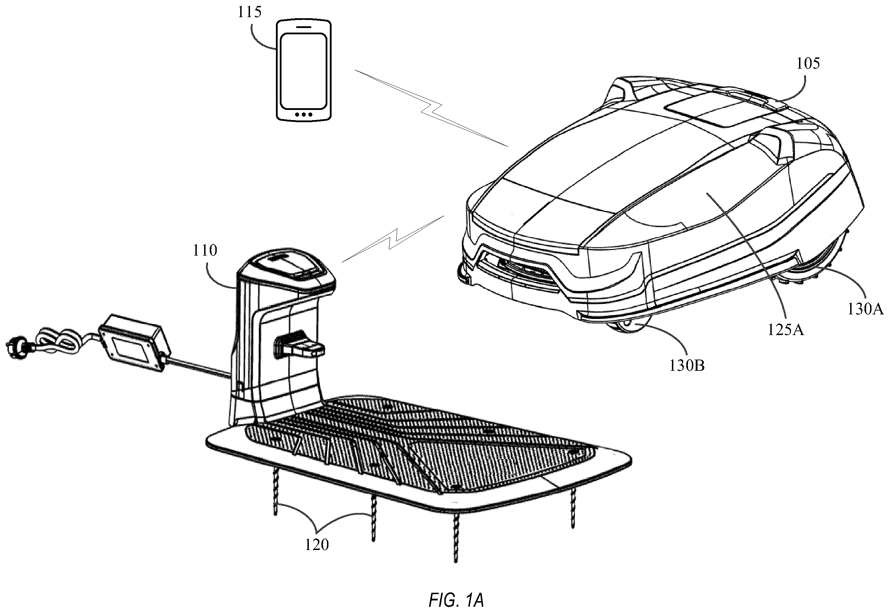

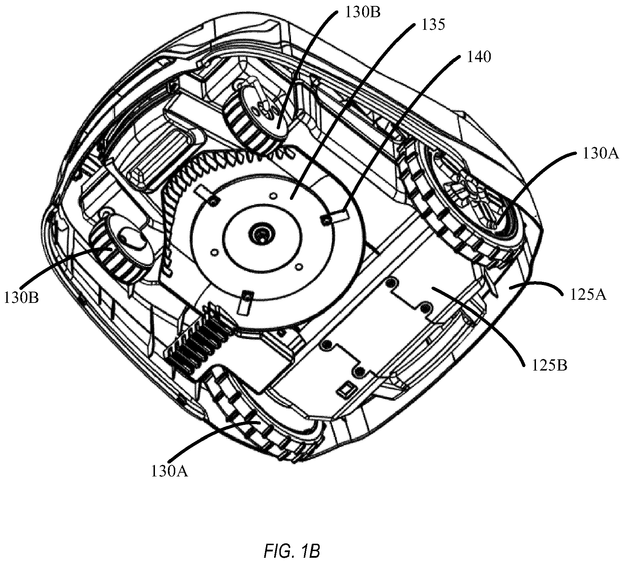

FIG. 1A illustrates a robotic garden tool 105 (e.g., a robotic lawn mower 105 that may also be referred to as a robotic mower 105), a docking station 110 for the robotic mower 105, and an external device 115 according to some example embodiments. Two or more devices 105, 110, 115 may make up a communication system in which the devices 105, 110, 115 communicate with each other as described in greater detail below. The communication system may include more or fewer devices than the amount of devices shown in FIG. 1. For example, the communication system may include additional robotic mowers 105, additional external devices 115, etc. As another example, in some instances, the external device 115 may not be included in the communication system. In some of such instances, the communication system may merely include one or more robotic mowers 105 and one or more docking stations 110. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal.

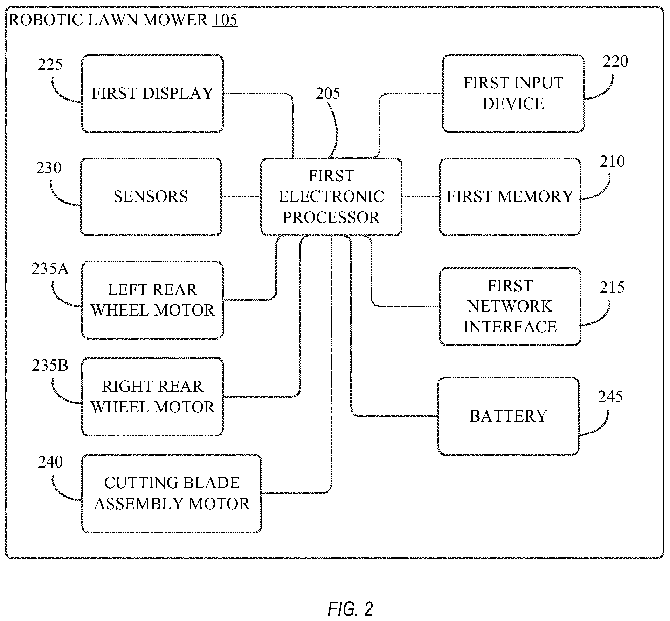

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

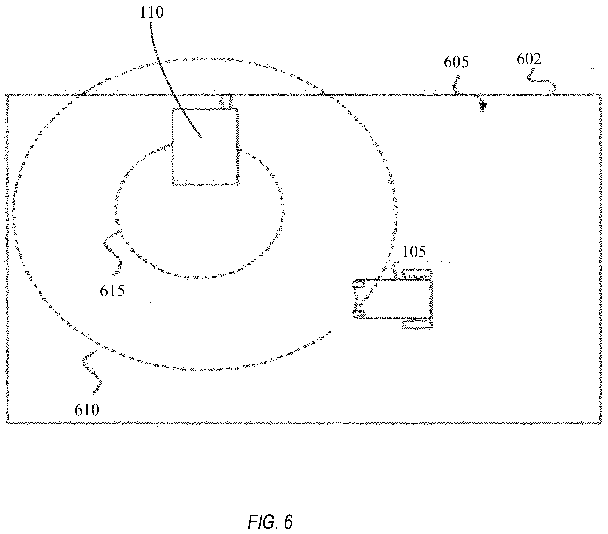

In some embodiments, the docking station 110 may also be electrically connected to a boundary cable 602 (i.e., boundary wire 602) (see FIG. 6). In some embodiments, the docking station 110 provides power to the boundary cable 602 to control the boundary cable 602 to provide/emit, for example, an electromagnetic signal that may be detected by the robotic mower 105. In some embodiments, the boundary cable 602 may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable 602). For example, a plurality of pegs/stakes may be used to pin the boundary cable 602 to the ground/soil. As another example, the boundary cable 602 may be buried in the ground/soil underneath the grass (e.g., if the boundary cable 602 is installed when a plot of land is being developed). In some embodiments, in response to detecting the electromagnetic signal from the boundary cable 602, the robotic mower 105 is configured to control its movement such that the robotic mower 105 remains within a boundary defined by the boundary cable 602. For example, in response to detecting the boundary cable 602, the robotic mower 105 may be configured to stop moving forward and turn in a random direction to begin traveling in an approximately straight line until the robotic mower 105 again detects the boundary cable 602.

In some embodiments, the robotic mower 105 does not operate in conjunction with a boundary cable 602. Rather, the robotic mower 105 may include mapping capabilities, positioning tracking capabilities, and/or the like that allow the robotic mower 105 to remain within a predefined boundary without the use of the boundary cable 602.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110. In some embodiments, the docking station 110 may be configured to emit a wireless signal using an ordinary data communication protocol (e.g., WiFi^{™}, Bluetooth^{™}, Bluetooth^{™} Low Energy (BLE), and/or the like). The robotic mower 105 may receive the wireless signal from the docking station 110 when the two devices 105 and 110 are in communication range of each other. The robotic mower 105 may determine a strength of the wireless signal from the docking station 110 over time as the robotic mower 105 moves along certain paths within an operating area 605 (i.e., work area) in order to move toward the docking station 110 during a docking process as described in greater detail below.

As indicated in FIG. 1A, in some embodiments, the robotic mower 105 is configured to wirelessly communicate with the external device 115 when the two devices 105 and 115 are in communication range of each other (e.g., via Bluetooth^{™}, WiFi^{™}, or the like). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

FIG. 1B illustrates a bottom perspective view of the robotic mower 105 according to some example embodiments. The robotic mower 105 may include a housing 125 that includes an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like).

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein. For example, the robotic mower 105 and/or the docking station 110 may include components and/or functionality described in PCT Application No. PCT/CN2017/091129, filed June 30, 2017, which has published as International Publication No. WO 2018/001358, the entire contents of which are hereby incorporated by reference and appended herein with related replacement black-and-white line drawings filed in related U.S. Application No. 16/312,236 that claims priority to PCT Application No. PCT/CN2017/091129.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135 (e.g., as described in PCT Application No. PCT/CN2017/091129). As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from the external device 115. In some embodiments, the first network interface 215 includes one or more transceivers for wirelessly communicating with the external device 115 and/or the docking station 110. Alternatively or in addition, the first network interface 215 may include a connector or port for receiving a wired connection to the external device 115, such as USB cable. In some embodiments, the first network interface 215 may act as a sensor and may be configured to receive a wireless signal from the docking station 110. The wireless signal from the docking station 110 may be is processed by the electronic processor 205 to determine a strength of the wireless signal (e.g., a received signal strength indicator (RSSI)). For example, the first network interface 215 acting as a sensor may include a wireless communications receiver, and the wireless signal received by the sensor may include a signal of an ordinary data communication protocol including at least one of a Wi-Fi^{™} signal and a Bluetooth^{™} signal (e.g., a Bluetooth^{™} Low Energy (BLE) signal).

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, the first network interface 215, and/or the like.

In some embodiments, the inner housing 125B includes at least two boundary cable sensors in the form of electromagnetic field sensors configured to detect an electromagnetic signal being emitted by the boundary cable 602. For example, the electromagnetic field sensors may be able to detect a strength and/or a polarity of the electromagnetic signal from the boundary cable 602.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235 is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

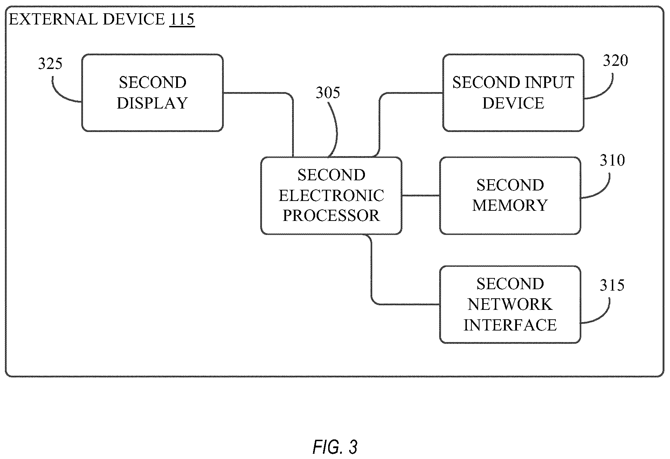

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second electronic processor 305 sends data to and receives data from the robotic mower 105 via the second network interface 315. In some embodiments, the external device 115 includes fewer or additional components in configurations different from that illustrated in FIG. 3. For example, the external device 115 may include a battery, a global positioning system (GPS) device, or the like. In some embodiments, the external device 115 performs functionality other than the functionality described below.

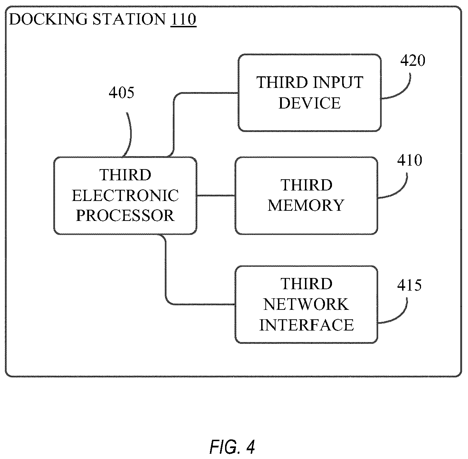

FIG. 4 is a block diagram of the docking station 110 according to some example embodiments. In the example shown, the docking station 110 includes a third electronic processor 405 electrically connected to a third memory 410, a third network interface 415, and a third user input device 420. These components are similar to the like-named components of the robotic mower 105 explained above with respect to FIG. 2 and function in a similar manner as described above. For example, the third network interface 415 may transmit a wireless signal that may be received by the robotic mower 105 to aid the robotic mower 105 in moving toward the docking station 110 during a docking process as explained in greater detail below. In some embodiments, the third input device 420 is a button or switch that controls whether the docking station 110 is powered on/off. In some embodiments, the docking station 110 includes fewer or additional components in configurations different from that illustrated in FIG. 4. For example, the docking station 110 may include a battery, a global positioning system (GPS) device, a display, or the like. In some embodiments, the docking station 110 performs functionality other than the functionality described below.

In some embodiments, the robotic mower 105 may travel randomly within an operating area defined by the boundary cable 602 or defined by a virtual boundary. For example, the robotic mower 105 may be configured to travel in an approximate straight line until the robotic mower 105 detects the boundary cable 602 or the virtual boundary. In response to detecting the boundary cable 602 or the virtual boundary, the robotic mower 105 may be configured to turn in a random direction and continue traveling in an approximate straight line along a new path until the boundary cable 602 is again detected, at which point this process repeats.

In some embodiments, during operation of the robotic mower 105 in the operating area 605 (e.g., at any time when the robotic mower 105 is not docked at the docking station 110 regardless of whether the robotic mower 105 is moving and/or mowing the lawn), the first electronic processor 205 may determine that the robotic mower 105 should return to the docking station 110 for docking. For example, the first electronic processor 205 may make this determination in response to determining that a battery level of the battery 245 is below a predetermined threshold. As another example, the first electronic processor 205 may make this determination in response to determining that a duration in which the robotic mower 105 was scheduled to operate has elapsed. As another example, the first electronic processor 205 may make this determination in response to receiving a wireless command from the external device 115 (e.g., that is transmitted by the external device 115 in response to receiving a user input from a user on the external device 115) that indicates that the robotic mower 105 should return to the docking station 110 to dock.

Controlling a robotic mower to move toward a docking station may be challenging, especially for a robotic mower that does not include complex navigational capabilities (e.g., a robotic mower configured to move in random approximate straight lines in the operating area) because the robotic mower may not know its location/position within the operating area. One method to control the robotic mower to move back to the docking station includes continuing movement of the robotic mower until the boundary cable or a virtual boundary is detected. Then, the robotic mower may follow the boundary cable or virtual boundary back to the docking station. However, such a method has disadvantages. For example, the robotic mower may frequently take a similar path to the docking station such that the lawn along the path may be worn down more than other parts of the operating area. As another example, movement along the boundary cable or virtual boundary may not be a very efficient method for the robotic mower to travel back to the docking station. In other words, the robotic mower may waste time and battery power by traveling additional distance back to the docking station compared to taking a more direct route to the docking station.

Another method to control a robotic mower to move back to a docking station includes configuring the docking station to emit a wireless signal that may be received and used by the robotic mower to navigate toward the docking station. However, robotic mowers that receive a signal from the docking station to aid the robotic mower in returning to the docking station may also have disadvantages. For example, such signals emitted by the docking station may be dedicated signals communicated back-and-forth between the robotic mower and the docking station (e.g., ultrasonic signals). To make use of these signals, the robotic mower may include complex components and programming to allow the robotic mower to determine an exact position and/or angle of the robotic mower with respect to the docking station. Such complex components and programming may be expensive and time consuming to manufacture and install, and may not be practical to be included in a robotic mower for consumer use. Additionally, such components and programming may require additional battery usage and processing power during operation compared to less complex components and programming.

Accordingly, there are technological problems with efficiently navigating robotic mowers in an operating area back to a docking station for docking purposes. The methods and devices described herein address the above-noted technological problems by making one or more estimations of a straight line travel path from a current location of the robotic mower 105 to the docking station 110. Embodiments described herein enable more efficient/precise control of the robotic mower 105 (that may otherwise move randomly within the operating area) without using complex mapping algorithms or complex position tracking that may require expensive positioning and computing capabilities and that may use valuable battery power and processing power.

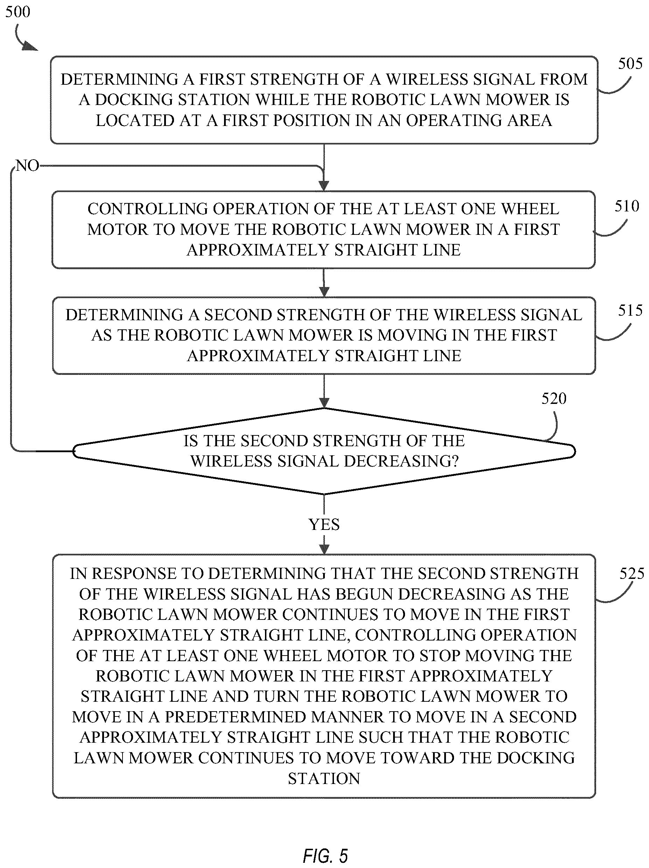

FIG. 5 illustrates a flowchart of a method 500 that may be performed by the first electronic processor 205 of the robotic mower 105 to control movement of the robotic mower 105 according to some example embodiments. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure.

At block 505, the first electronic processor 205 determines a first strength of a wireless signal from the docking station 110 (e.g., a received signal strength indicator (RSSI)) while the robotic mower 105 is located at a first position in an operating area 605. For example, the wireless signal from the docking station 110 may be emitted by the third network interface 415 using an ordinary data communication protocol (e.g., WiFi^{™}, Bluetooth^{™}, Bluetooth^{™} Low Energy (BLE), and/or the like) as described previously herein.

In some embodiments, the first electronic processor 205 may determine and record/store the first strength of the wireless signal at predetermined periodic time intervals (e.g., every one second, every 100 milliseconds, every ten milliseconds, or the like). In some embodiments, the first electronic processor 205 may be configured to determine the first strength of the wireless signal by determining an average of a predetermined amount of previously determined first strengths of the wireless signal to account for potential variations in the first strength of the wireless signal that may be caused by noise. For example, the first electronic processor 205 may determine the first strength of the wireless signal to be an average of the most recent ten or some other amount of determinations of the first strength of the wireless signal.

In some embodiments, the first position of the robotic mower 105 is a current position of the robotic mower 105 during operation in the operation area 605 at a time that the first electronic processor 205 determines that the robotic mower 105 should return to the docking station 110 for docking. The exact coordinates of the first position of the robotic mower 105 and/or the position of the robotic mower 105 with respect to the docking station 110 may not be known to the robotic mower 105 or to the docking station 110 upon determining that the robotic mower 105 should return to the docking station 110.

Accordingly, to aid the robotic mower 105 in returning to the docking station 110, the robotic mower 105 may receive, via a sensor embodied by the first network interface 215, the wireless signal from the docking station 110 when the two devices 105 and 110 are in communication range of each other. In many situations, a wireless signal coverage area 610 (i.e., communication range) of the wireless signal from the docking station 110 is as large or larger than the entire operating area 605 of the robotic mower 105. However, in some situations, the wireless signal coverage area 610 may be smaller than the entire operating area 605 and/or may not cover the entire operating area 605 as shown in the example embodiment of FIG. 6. In situations where the wireless signal coverage area 610 may be smaller than the entire operating area 605 and/or may not cover the entire operating area 605, the first electronic processor 205 may be configured to determine that the sensor of the robotic mower 105 is not currently receiving the wireless signal from the docking station 110. For example, the first electronic processor 205 may determine that the robotic mower 105 is outside of communication range 610 of the docking station 110.

In response to determining that the sensor is not currently receiving the wireless signal from the docking station 110, the first electronic processor 205 may be configured to control operation of the at least one wheel motor 235 to at least one of (i) move in a random approximately straight line and (ii) continue movement control of the robotic mower 105 that was being implemented before the first electronic processor 205 determined that the robotic mower 105 should return to the docking station 110. The first electronic processor 205 may control operation of the at least one wheel motor 235 in accordance with the immediately above operations (i) and/or (ii) until the first electronic processor 205 determines that the sensor is receiving the wireless signal from the docking station 110. In other words, in response to determining that the robotic mower 105 should return to the docking station 110, the robotic mower 105 may be controlled to move within the operating area 605 until the robotic mower 105 is within the wireless signal coverage area 610 of the docking station 110. In some embodiments, in response to determining that the sensor of the robotic mower 105 is receiving the wireless signal from the docking station 110, the first electronic processor 205 is configured to determine the first strength of the wireless signal while the robotic mower 105 is located at the first position (and control operation of the at least one wheel motor 235 to move the robotic mower 105 in the first approximately straight line as explained below with respect to block 510). In other words, the first position may include the position/location at which the robotic mower 105 is located when the wireless signal from the docking station 110 is first received after the robotic mower 105 determines that the robotic mower 105 should return to the docking station 110.

In some embodiments, in response to determining that the sensor of the robotic mower 105 is not currently receiving the wireless signal from the docking station 110 when the robotic mower 105 determines that it should return to the docking station 110, the first electronic processor 205 controls the robotic mower 105 to move until the robotic mower 105 detects a first of the (i) wireless signal from the docking station 110 and (ii) the boundary wire 602. In situations where the robotic mower 105 detects the boundary wire 602 before detecting the wireless signal from the docking station 110, the first electronic processor 205 may control the robotic mower 105 to follow the boundary wire 602 (i.e., travel along the boundary wire 602) until the robotic mower 105 detects the wireless signal from the docking station 110.

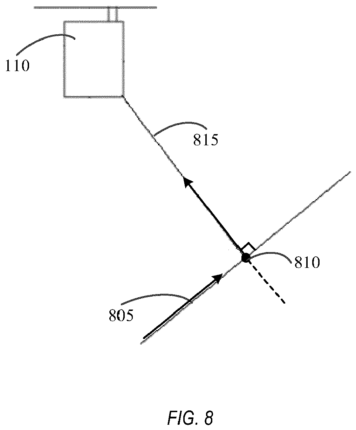

At block 510, the first electronic processor 205 may be configured to control operation of the at least one wheel motor 235 to move the robotic mower 105 in a first approximately straight line. Accordingly, the robotic mower 105 may move from the first position (at block 505) to one or more second positions along the first approximately straight line (e.g., approximately straight line 805 of FIG. 8).

In some embodiments, in response to determining that the robotic mower 105 should return to the docking station 110, the first electronic processor 205 is configured to determine the first strength of the wireless signal while the robotic mower 105 is located at the first position (at block 505), and control operation of the at least one wheel motor 235 to move the robotic mower 105 in the first approximately straight line in a random direction. In some embodiments, the random direction includes continuing movement control of the robotic mower 105 that was being implemented before the first electronic processor 205 determined that the robotic mower 105 should return to the docking station 110. For example, the robotic mower 105 may continue traveling along an approximately straight line that it was previously traveling on while also determining and recording the first strength of the wireless signal from the docking station 110 at the first position of the robotic mower 105. In some embodiments, the random direction is a different direction/approximately straight line in which the robotic mower 105 was traveling before the first electronic processor 205 determined that the robotic mower 105 should return to the docking station 110.

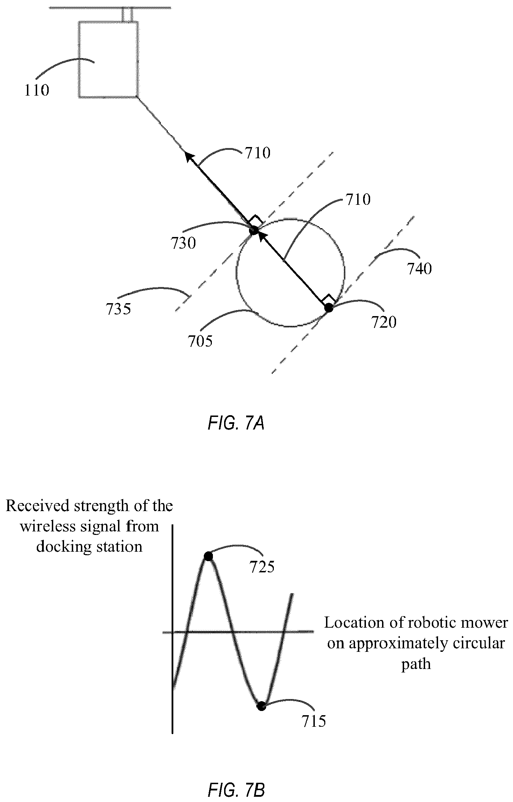

In some embodiments, in response to determining that the robotic mower 105 should return to the docking station 110, the first electronic processor 205 is configured to control operation of the at least one wheel motor 235 to move the robotic mower 105 in an approximately circular path 705 to attempt to estimate a more accurate first approximate straight line path 710 toward the docking station 110 (see FIG. 7). In such embodiments, the first electronic processor 205 may repeatedly determine a strength of the wireless signal (e.g., a third strength of the wireless signal) while the robotic mower 105 is moving in the approximately circular path 705. For example, the first electronic processor 205 may determine and record/store the third strength of the wireless signal at predetermined periodic time intervals (e.g., every one second, every 100 milliseconds, every ten milliseconds, or the like) and/or wheel rotation amounts. In some embodiments, repeatedly determining a strength of the wireless signal (e.g., a third strength of the wireless signal) while the robotic mower 105 is moving in the approximately circular path 705 includes stopping the robotic mower 105 at different points along the path 705 and determining one or more strengths of the wireless signal at each of the points/locations while the robotic mower 105 is stationary.

In some embodiments, the first electronic processor 205 may determine at least one of (i) a minimum level 715 of the third strength of the wireless signal along the approximately circular path 705 at a second position 720 and (ii) a maximum level 725 of the third strength of the wireless signal along the approximately circular path 705 at a third position 730. For example, as shown in FIGS. 7A and 7B, as the robotic mower 105 moves in any approximately circular path (e.g., the path 705) within the operating area 605, a closest point on the path 705 to the docking station 110 (e.g., the third position 730) should have the highest strength of the wireless signal received from the docking station 110 of any other point along the path 705 (assuming similar noise for the wireless signal at all points on the path 705). Similarly, a furthest point on the path 705 from the docking station 110 (e.g., the second position 720) should have the lowest strength of the wireless signal received from the docking station 110 of any other point along the path 705.

While traveling along the approximately circular path 705, in some embodiments, the first electronic processor 205 may determine that the robotic mower 105 is located at the second position 720 in response to determining that the third strength of the wireless signal received by the robotic mower 105 from the docking station 110 changes from decreasing as the robotic mower 105 moves along the path 705 to increasing as the robotic mower 105 moves along the path 705. For example, the point 715 on the graph of FIG. 7B may represent this point of change (e.g., second position/point 720) between the third strength of the wireless signal changing from decreasing to increasing as the robotic mower 105 travels along the path 705. Similarly, in some embodiments, the first electronic processor 205 may determine that the robotic mower 105 is located at the third position 730 in response to determining that the third strength of the wireless signal received by the robotic mower 105 from the docking station 110 changes from increasing as the robotic mower 105 moves along the path 705 to decreasing as the robotic mower 105 moves along the path 705. For example, the point 725 on the graph of FIG. 7B may represent this point of change (e.g., third position/point 730) between the third strength of the wireless signal changing from increasing to decreasing as the robotic mower 105 travels along the path 705. As is evident from FIG. 7B and the above explanation, the x-axis of the graph of FIG. 7B represents a location of the robotic mower 105 as it moves along the approximately circular path 705, and the y-axis of the graph of FIG. 7B represents a strength of the wireless signal received by the robotic mower 105 from the docking station 110 as determined by the robotic mower 105.

In some embodiments, the first electronic processor 205 is configured to determine whether the third strength of the wireless signal is increasing or decreasing in one or more similar manners as described below with respect to the block 520.

In some embodiments, the first electronic processor 205 is configured to control operation of the at least one wheel motor 235 to at least one of (i) turn the robotic mower 105 approximately ninety degrees from the third position 730 in a second direction that is opposite a first direction in which the robotic mower 105 is turning in order to move in the approximately circular path 705, and move the robotic mower 105 in the first approximately straight line 710, and (ii) turn the robotic mower 105 approximately ninety degrees from the second position 720 in the first direction, and move the robotic mower 105 in the first approximately straight line 710. Such control of the robotic mower 105 may cause the robotic mower 105 to move along the first approximately straight line 710 in a direction that is generally toward the docking station 110 as shown in FIG. 7A.

For example, when the robotic mower 105 has reached the third position 730 corresponding to the maximum third strength 725 of the wireless signal along the path 705, the robotic mower 105 will be facing and instantaneously traveling along a line 735 that is tangent to the path 705 (i.e., a tangent line 735). Regardless of whether the robotic mower 105 is traveling clockwise or counterclockwise on the path 705 and in response to determining that the robotic mower 105 has reached the third position 730, the robotic mower 105 may be configured to turn ninety degrees away from the interior of the approximately circular path 705 (i.e., turn in in a second direction that is opposite a first direction in which the robotic mower 105 is turning in order to move in the approximately circular path 705) to approximately be facing the docking station 110. The robotic mower 105 may be configured to move in an approximately straight line (e.g., in the first approximately straight line 710) toward the docking station 110.

Similarly, as another example, when the robotic mower 105 has reached the second position 720 corresponding to the minimum third strength 715 of the wireless signal along the path 705, the robotic mower 105 will be facing and instantaneously traveling along a line 740 that is tangent to the path 705 (i.e., a tangent line 740). Regardless of whether the robotic mower 105 is traveling clockwise or counterclockwise on the path 705 and in response to determining that the robotic mower 105 has reached the second position 720, the robotic mower 105 may be configured to turn ninety degrees toward the interior of the approximately circular path 705 (i.e., turn in in a second direction that is the same as the first direction in which the robotic mower 105 is turning in order to move in the approximately circular path 705) to approximately be facing the docking station 110. The robotic mower 105 may be configured to move along an approximately straight line (e.g., along the first approximately straight line 710) toward the docking station 110.

In some embodiments, to make the ninety degree turns described above (and/or other turns described herein), the robotic mower 105 may be configured to stop moving forward and pivot in place by rotating a first wheel 130A on one side of the robotic mower 105 forward while rotating a second wheel 130A on an opposite side of the robotic mower 105 in reverse (i.e., in an opposite direction in which the first wheel 130A is rotating).

While the robotic mower 105 is moving in the first approximately straight line (e.g., line 710 of FIG. 7A), at block 515, the first electronic processor 205 may be configured to determine a second strength of the wireless signal received from the docking station 110. In some embodiments, the first electronic processor 205 may repeatedly determine second strengths of the wireless signal as the robotic mower 105 is moving in the approximately straight line 710. For example, the first electronic processor 205 may determine and record/store the second strength of the wireless signal at predetermined periodic time intervals (e.g., every one second, every 100 milliseconds, every ten milliseconds, or the like). In some embodiments, the first electronic processor 205 may be configured to determine a rolling average of a predetermined amount of previously determined second strengths of the wireless signal to approximate a change in second strength of the wireless signal while accounting for potential variations in the second strength of the wireless signal that may be caused by noise. For example, the first electronic processor 205 may determine the second strength of the wireless signal to be an average of the most recent ten or some other amount of determinations of the second strength of the wireless signal. In some embodiments, the first electronic processor 205 may repeatedly determine sequential/rolling averages of the most recent determinations of the second strength of the wireless signal to determine whether and how the second strength of the wireless signal is changing as the robotic mower 105 is moving along the first approximately straight line (e.g., first approximately straight line 710). In some embodiments, repeatedly determining a strength of the wireless signal (e.g., the second strength of the wireless signal) as the robotic mower 105 is moving in the approximately straight line 710 includes stopping the robotic mower 105 at different points along the path 710 and determining one or more strengths of the wireless signal at each of the points/locations while the robotic mower 105 is stationary. In some embodiments, intermittent/stop-and-go movement of the robotic mower 105 along a path may still be considered movement of the robotic mower 105 along the path.

In some embodiments, at block 520, the first electronic processor 205 is configured to determine whether the second strength of the wireless signal is decreasing as the robotic mower 105 moves along the first approximately straight line. In some embodiments, the first electronic processor 205 may compare the second strength of the wireless signal at one or more second positions on the first approximately straight line to the first strength of the wireless signal determined when the robotic mower 105 was located at the first position (at block 505). In some embodiments, the first electronic processor 205 may additionally or alternatively compare the second strength of the wireless signal at one or more second positions on the first approximately straight line and at one or more third positions on the first approximately straight line.

In response to the first electronic processor 205 determining that the second strength of the wireless signal is not decreasing while the robotic mower 105 is moving in the first approximately straight line (at block 520), the method 500 proceeds back to block 510 such that the first electronic processor 205 continues to control operation of the at least one wheel motor 235 to move the robotic mower 105 in the first approximately straight line. On the other hand, in response to the first electronic processor 205 determining that the second strength of the wireless signal has begun to decrease while the robotic mower 105 is moving in the first approximately straight line (at block 520), the method 500 proceeds to block 525.

Accordingly, in some embodiments, the first electronic processor 205 may be configured to control operation of the at least one wheel motor 235 to continue to move the robotic mower 105 in the first approximately straight line as long as the second strength of the wireless signal is not decreasing. For example, when the second strength of the wireless signal is increasing and/or remains approximately constant between consecutive time periods during which the second strength of the wireless signal is evaluated as the robotic mower 105 moves along the first approximately straight line, the robotic mower 105 may be configured to continue moving in the first approximately straight line. In some embodiments, the first electronic processor 205 may be configured to control operation of the at least one wheel motor 235 to continue to move the robotic mower 105 in the first approximately straight line as long as the second strength of the wireless signal is increasing. For example, in some embodiments, when the second strength of the wireless signal remains approximately constant between consecutive time periods during which the second strength of the wireless signal is evaluated, the method 500 may be configured to proceed to block 525.

As shown in FIG. 8, as the robotic mower 105 moves in any approximately straight line (e.g., line/path 805) within the operating area 605, a closest point 810 on the path 805 to the docking station 110 should have the highest strength of the wireless signal received from the docking station 110 of any other point along the path 805 (assuming similar noise for the wireless signal at all points on the path 805). In other words, when the robotic mower 105 is traveling along any approximately straight line 805, the second strength of the wireless signal from the docking station 110 should be strongest at a point on the approximately straight line 805 where a line 815 through a point 810 and the docking station 110 is perpendicular to the approximately straight line 805. In some embodiments, the first electronic processor 205 may determine the closest point 810 on the path 805 to the docking station 110 by determining that the second strength of the wireless signal has begun decreasing as the robotic mower 105 continues to move in the first approximately straight line 805.

In response to determining that the second strength of the wireless signal has begun decreasing as the robotic mower 105 continues to move in the first approximately straight line (at block 520), at block 525, the first electronic processor 205 may be configured to control operation of the at least one wheel motor 235 to stop moving the robotic mower 105 in the first approximately straight line and turn the robotic mower 105 to move in a predetermined manner to move in a second approximately straight line such that the robotic mower 105 continues to move toward the docking station 110. In other words, at block 525, the first electronic processor 205 may adjust a movement pattern of the robotic mower 105 by changing the manner in which the robotic mower 105 is moving within the operating area 605. In some embodiments, the first electronic processor 205 sets a flag (e.g., in the first memory 210) in response to determining that the second strength of the wireless signal has begun decreasing as the robotic mower 105 continues to move in the first approximately straight line (at block 520). In some embodiments, the flag indicates that the robotic mower 105 has or is going to cease moving along the first approximately straight line and attempt to make a ninety degree turn toward the docking station 110.

In some embodiments, the first electronic processor 205 may be configured to identify when the robotic mower 105 has reached the closest point 810 on the approximately straight line path 805 to the docking station 110 (as described above), but the first electronic processor 205 may not be able to determine, with certainty, which direction to turn in order to continue traveling toward the docking station 110 (e.g., whether to make a ninety degree turn to the right or left). Accordingly, the first electronic processor 205 may be configured to use trial and error (as indicated by the flag set by the first electronic processor 205) to turn ninety degrees in a first direction and then determine whether the ninety degree turn results in the robotic mower 105 traveling toward the docking station 110.

For example, the first electronic processor 205 is configured to control operation of the at least one wheel motor 235 to turn the robotic mower 105 to move in the predetermined manner to move in the second approximately straight line (at block 525) by controlling operation of the at least one wheel motor 235 to turn the robotic mower 105 approximately ninety degrees in a preliminary direction along the second approximately straight line 815. The first electronic processor 205 may also control the robotic mower 105 to move along the second approximately straight line 815 (see FIG. 8). For example, the preliminary direction may be left or right such that the robotic mower 105 is moving toward or away from the docking station 110 in the example shown in FIG. 8. In some embodiments, the preliminary direction is random. In some embodiments, the preliminary direction is constant (e.g., always left or always right).

During the movement of the robotic mower 105 in the preliminary direction along the second approximately straight line 815, the first electronic processor 205 may be configured to determine a third strength of the wireless signal received by the robotic mower 105 from the docking station 110. In some embodiments, the third strength of the wireless signal while the robotic mower 105 is moving along the second approximately straight line may be determined in a similar manner as the second strength of the wireless signal while the robotic mower 105 is moving along the first approximately straight line 710 (which may correspond to first approximately straight line 805). For example, the first electronic processor 205 may compare the third strength of the wireless signal at one or more third positions on the second approximately straight line 815 to the second strength of the wireless signal determined when the robotic mower 105 was located at the closest point 810 on the path 805 to the docking station 110 (at block 520).

In some embodiments, the first electronic processor 205 may be configured to determine the third strength of the wireless signal at one or more third locations on the second approximately straight line 815 after a predetermined amount of time or a predetermined number of wheel rotations since the robotic mower 105 began traveling along the line 815. In some embodiments, when the third strength of the wireless signal is approximately equal to the second strength of the wireless signal as the robotic mower 105 moves along the second approximately straight line 815 in the preliminary direction, the first electronic processor 205 may control the robotic mower 105 to continue moving along the second approximately straight line 815 in the preliminary direction until there is a difference between the third strength of the wireless signal and the second strength of the wireless signal. In some embodiments, the first electronic processor 205 may be configured to determine the second strength of the wireless signal when the robotic mower 105 is located at the closest point 810 on the path 805 to the docking station 110 (or any other strength of the wireless signal) by causing the robotic mower 105 to stop moving and determining an average of a predetermined amount of previously determined second strengths of the wireless signal to account for potential variations in the second strength of the wireless signal that may be caused by noise.

In some embodiments, in response to determining that the third strength of the wireless signal is greater than the second strength of the wireless signal (e.g., the robotic mower 105 made a ninety degree left turn and the preliminary direction is toward the docking station 110 in the example shown in FIG. 8), the first electronic processor 205 is configured to determine that the movement of the robotic mower 105 in the preliminary direction along the second approximately straight line 815 causes the robotic mower 105 to move toward the docking station 110. Accordingly, the first electronic processor 205 may clear the flag that indicates that the robotic mower 105 is attempting to make a ninety degree turn toward the docking station 110 because the robotic mower 105 has successfully made the ninety degree turn and is moving along the second approximately straight line 815 toward the docking station 110.

On the other hand, in some embodiments, in response to determining that the third strength of the wireless signal is less than the second strength of the wireless signal (e.g., the robotic mower 105 made a ninety degree right turn and the preliminary direction is away from the docking station 110 in the example shown in FIG. 8), the first electronic processor 205 is configured to determine that the movement of the robotic mower 105 in the preliminary direction along the second approximately straight line causes the robotic mower 105 to move away from the docking station 110. Additionally, because the flag is set that indicates that the robotic mower 105 is attempting to make a ninety degree turn toward the docking station 110, the first electronic processor 205 may be configured to control operation of the at least one wheel motor 235 to make a one hundred eighty degree turn (rather than a ninety degree turn if the flag was not set) to move the robotic mower 105 along the second approximately straight line in a second direction opposite to the preliminary direction. In this example, because the third strength of the wireless signal is determined to be less than the second strength of the wireless signal and because the flag is set, the first electronic processor 205 determines that the preliminary direction in which the robotic mower 105 turned at point 810 was the wrong direction (i.e., away from the docking station 110). Accordingly, the first electronic processor 205 may control the robotic mower 105 to make a one hundred eighty degree turn to move in the opposite direction that should correspond approximately to a straight line heading toward the docking station 110. After making the one hundred eighty degree turn and beginning movement in the second approximately straight line 815 toward the docking station 110, the first electronic processor 205 may clear the flag that indicates that the robotic mower 105 is attempting to make a ninety degree turn toward the docking station 110 because the robotic mower 105 has made a ninety degree turn and a corrective one hundred eighty degree turn, and is moving along the second approximately straight line 815 toward the docking station 110.

Once robotic mower 105 is traveling in the second approximately straight line 815 in a direction toward the docking station 110 and the flag that that indicates that the robotic mower 105 is attempting to make a ninety degree turn toward the docking station 110 has been cleared, the first electronic processor 205 continues executing steps similar to blocks 510, 515, 520, and 525 of the method 500 of FIG. 5. For example, the first electronic processor 205 is configured to determine (e.g., repeatedly) a third strength of the wireless signal as the robotic mower 105 moves along the second approximately straight line 815, and control operation of the at least one wheel motor 235 to continue to move the robotic mower 105 along the second approximately straight line 815 toward the docking station 110 in response to determining that the third strength of the wireless signal is not decreasing as the robotic mower 105 is moving in the second approximately straight line 815. In other words, the first electronic processor 205 may repeat actions similar to those of blocks 510, 515, 520, and 525 to move the robotic mower 105 closer and closer to the docking station 110 along approximately straight line paths. In some embodiments, actions similar to those of blocks 510, 515, 520, and 525 may be repeated by the first electronic processor 205 in response to the robotic mower 105 detecting or running into an obstacle while traveling on one of the approximately straight lines/paths toward the docking station 110.

In some embodiments, during execution of the method 500, the first electronic processor 205 may also be configured to determine whether the strength of the wireless signal from docking station 110 is greater than a predetermined strength of wireless signal threshold (e.g., an RSSI threshold indicated by a high strength of signal range 615 of FIG. 6). For example, the first electronic processor 205 may be configured to determine that at least one of the first strength of the wireless signal and the second strength of the wireless signal is greater than the predetermined strength of wireless signal threshold. In some embodiments, the strength of the wireless signal being above the predetermined strength of wireless signal threshold indicates that the robotic mower 105 is within an approximate certain distance from the docking station 110 (e.g., within the high strength of signal range 615 of FIG. 6). In some embodiments, in response to determining that the strength of the wireless signal (e.g., at least one of the first strength of the wireless signal and the second strength of the wireless signal) is greater than the predetermined strength of wireless signal threshold, the first electronic processor 205 may be configured to adjust an operating parameter of the robotic mower 105. For example, the operating parameter may include a speed at which the robotic mower 105 travels through the operating area 605. In some embodiments, the first electronic processor 205 may be configured to reduce the speed at which the robotic mower 105 travels through the operating area 605 in response to determining that the strength of the wireless signal is greater than the predetermined strength of wireless signal threshold. As another example, the adjustment of the operating parameter may include disabling one or more sensors 230 of the robotic mower 105 (e.g., obstacle sensors such as ultrasonic sensors to allow the robotic mower 105 to bump into the docking station 110 to attempt to dock).

In some embodiments, within the high strength of signal range 615, the robotic mower 105 may be configured to continue performing actions similar to those of blocks 510, 515, 520, and 525 of the method 500 of FIG. 5, for example, at a reduced travel speed. In some embodiments, the robotic mower 105 may continue to perform the actions similar to those of blocks 510, 515, 520, and 525 of the method 500 of FIG. 5 until one or more sensors 230 of the robotic mower 105 detect a magnet, a docking wire/cable loop, and/or another placement device that is used by the robotic mower 105 to dock the robotic mower 105 on the docking station 110 (e.g., to make an electrical connection between the robotic mower 105 and the docking station 110 for charging purposes).

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A robotic garden tool comprising:
a housing;
a set of wheels coupled to the housing and configured to rotate to propel the robotic garden tool on an operating surface;
at least one wheel motor coupled to one or more wheels of the set of wheels, the at least one wheel motor configured to drive rotation of the one or more wheels;
a sensor configured to receive a wireless signal from a docking station, wherein the robotic garden tool is configured to dock at the docking station; and
an electronic processor in communication with the sensor and configured to control the robotic garden tool to move toward the docking station by
determining a first strength of the wireless signal while the robotic garden tool is located at a first position in an operating area,
controlling operation of the at least one wheel motor to move the robotic garden tool in a first approximately straight line,
repeatedly determining a second strength of the wireless signal as the robotic garden tool is moving in the first approximately straight line,
controlling operation of the at least one wheel motor to continue to move the robotic garden tool in the first approximately straight line in response to determining that the second strength of the wireless signal is not decreasing as the robotic garden tool is moving in the first approximately straight line,
determining that the second strength of the wireless signal has begun decreasing as the robotic garden tool continues to move in the first approximately straight line, and
in response to determining that the second strength of the wireless signal has begun decreasing as the robotic garden tool continues to move in the first approximately straight line, controlling operation of the at least one wheel motor to stop moving the robotic garden tool in the first approximately straight line and turn the robotic garden tool to move in a predetermined manner to move in a second approximately straight line such that the robotic garden tool continues to move toward the docking station.

2. The robotic garden tool of claim 1, wherein the electronic processor is configured to control operation of the at least one wheel motor to turn the robotic garden tool to move in the predetermined manner to move in the second approximately straight line by:
controlling operation of the at least one wheel motor to turn the robotic garden tool approximately ninety degrees in a preliminary direction along the second approximately straight line;
during movement of the robotic garden tool in the preliminary direction along the second approximately straight line, determining a third strength of the wireless signal; and
in response to determining that the third strength of the wireless signal is greater than the second strength of the wireless signal,
determining that the movement of the robotic garden tool in the preliminary direction along the second approximately straight line causes the robotic garden tool to move toward the docking station,
repeatedly determining the third strength of the wireless signal, and
controlling operation of the at least one wheel motor to continue to move the robotic garden tool along the second approximately straight line in the preliminary direction in response to determining that the third strength of the wireless signal is not decreasing as the robotic garden tool is moving in the second approximately straight line.

3. The robotic garden tool of claim 2, wherein the electronic processor is configured to control operation of the at least one wheel motor to turn the robotic garden tool to move in the predetermined manner to move in the second approximately straight line by:
in response to determining that the third strength of the wireless signal is less than the second strength of the wireless signal,
determining that the movement of the robotic garden tool in the preliminary direction along the second approximately straight line causes the robotic garden tool to move away from the docking station,
controlling operation of the at least one wheel motor to make a one hundred eighty degree turn to move the robotic garden tool along the second approximately straight line in a second direction opposite to the preliminary direction,
repeatedly determining the third strength of the wireless signal while the robotic garden tool is moving in the second direction along the second approximately straight line, and
controlling operation of the at least one wheel motor to continue to move the robotic garden tool along the second approximately straight line in the second direction in response to determining that the third strength of the wireless signal is not decreasing as the robotic garden tool is moving in the second approximately straight line.

4. The robotic garden tool of claim 1, wherein the electronic processor is configured to:
determine that at least one of the first strength of the wireless signal and the second strength of the wireless signal is greater than a predetermined strength of wireless signal threshold;
in response to determining that the at least one of the first strength of the wireless signal and the second strength of the wireless signal is greater than the predetermined strength of wireless signal threshold, adjust an operating parameter of the robotic garden tool;
and optionally
wherein the operating parameter includes a speed at which the robotic garden tool travels through the operating area, and
wherein the electronic processor is configured to reduce the speed at which the robotic garden tool travels through the operating area in response to determining that the at least one of the first strength of the wireless signal and the second strength of the wireless signal is greater than the predetermined strength of wireless signal threshold.

5. The robotic garden tool of claim 1, wherein the electronic processor is configured to:
during operation in the operating area, determine that the robotic garden tool should return to the docking station; and
in response to determining that the robotic garden tool should return to the docking station, determine the first strength of the wireless signal while the robotic garden tool is located at the first position, and control operation of the at least one wheel motor to move the robotic garden tool in the first approximately straight line, wherein the first approximately straight line is in a random direction.

6. The robotic garden tool of claim 1, wherein the electronic processor is configured to:
during operation in the operating area, determine that the robotic garden tool should return to the docking station; and
in response to determining that the robotic garden tool should return to the docking station,
control operation of the at least one wheel motor to move the robotic garden tool in an approximately circular path,
repeatedly determining a third strength of the wireless signal while the robotic garden tool is moving in the approximately circular path,
determine at least one of a minimum level of the third strength of the wireless signal along the approximately circular path at a second position and a maximum level of the third strength of the wireless signal along the approximately circular path at a third position, and
control operation of the at least one wheel motor to at least one of (i) turn the robotic garden tool approximately ninety degrees from the third position in a second direction that is opposite a first direction in which the robotic garden tool is turning in order to move in the approximately circular path, and move the robotic garden tool in the first approximately straight line, and (ii) turn the robotic garden tool approximately ninety degrees from the second position in the first direction, and move the robotic garden tool in the first approximately straight line.

7. The robotic garden tool of claim 1, wherein the electronic processor is configured to:
during operation in the operating area, determine that the robotic garden tool should return to the docking station;
in response to determining that the robotic garden tool should return to the docking station, determine that the sensor is not currently receiving the wireless signal from the docking station;
in response to determining that the sensor is not currently receiving the wireless signal from the docking station, control operation of the at least one wheel motor to at least one of (i) move in a random approximately straight line and (ii) continue movement control of the robotic garden tool that was being implemented before the electronic processor determined that the robotic garden tool should return to the docking station, until the electronic processor determines that the sensor is receiving the wireless signal from the docking station; and
in response to determining that the sensor is receiving the wireless signal from the docking station, determine the first strength of the wireless signal while the robotic garden tool is located at the first position, and control operation of the at least one wheel motor to move the robotic garden tool in the first approximately straight line.

8. The robotic garden tool of claim 1, wherein the sensor includes a wireless communications receiver and the wireless signal received by the sensor includes at least one of a Wi-Fi^{™} signal and a Bluetooth^{™} signal.

9. A method for controlling a robotic garden tool, the method comprising:
determining, with an electronic processor of the robotic garden tool and while the robotic garden tool is located at a first position in an operating area, a first strength of a wireless signal received by a sensor of the robotic garden tool from a docking station, wherein the robotic garden tool is configured to dock at the docking station;
controlling, with the electronic processor, operation of at least one wheel motor of the robotic garden tool to move the robotic garden tool in a first approximately straight line, wherein the robotic garden tool includes a housing, a set of wheels coupled to the housing and configured to rotate to propel the robotic garden tool on an operating surface, and the at least one wheel motor coupled to one or more wheels of the set of wheels and configured to drive rotation of the one or more wheels;
repeatedly determining, with the electronic processor, a second strength of the wireless signal as the robotic garden tool is moving in the first approximately straight line;
controlling, with the electronic processor, operation of the at least one wheel motor to continue to move the robotic garden tool in the first approximately straight line in response to determining that the second strength of the wireless signal is not decreasing as the robotic garden tool is moving in the first approximately straight line;
determining, with the electronic processor, that the second strength of the wireless signal has begun decreasing as the robotic garden tool continues to move in the first approximately straight line; and
in response to determining that the second strength of the wireless signal has begun decreasing as the robotic garden tool continues to move in the first approximately straight line, controlling, with the electronic processor, operation of the at least one wheel motor to stop moving the robotic garden tool in the first approximately straight line and turn the robotic garden tool to move in a predetermined manner to move in a second approximately straight line such that the robotic garden tool continues to move toward the docking station.

10. The method of claim 9, wherein controlling operation of the at least one wheel motor to turn the robotic garden tool to move in the predetermined manner to move in the second approximately straight line includes:
controlling, with the electronic processor, operation of the at least one wheel motor to turn the robotic garden tool approximately ninety degrees in a preliminary direction along the second approximately straight line;
during movement of the robotic garden tool in the preliminary direction along the second approximately straight line, determining, with the electronic processor, a third strength of the wireless signal; and
in response to determining that the third strength of the wireless signal is greater than the second strength of the wireless signal,
determining, with the electronic processor, that the movement of the robotic garden tool in the preliminary direction along the second approximately straight line causes the robotic garden tool to move toward the docking station,
repeatedly determining, with the electronic processor, the third strength of the wireless signal, and
controlling, with the electronic processor, operation of the at least one wheel motor to continue to move the robotic garden tool along the second approximately straight line in the preliminary direction in response to determining that the third strength of the wireless signal is not decreasing as the robotic garden tool is moving in the second approximately straight line;
and optionally wherein controlling operation of the at least one wheel motor to turn the robotic garden tool to move in the predetermined manner to move in the second approximately straight line includes:
in response to determining that the third strength of the wireless signal is less than the second strength of the wireless signal,
determining, with the electronic processor, that the movement of the robotic garden tool in the preliminary direction along the second approximately straight line causes the robotic garden tool to move away from the docking station,
controlling, with the electronic processor, operation of the at least one wheel motor to make a one hundred eighty degree turn to move the robotic garden tool along the second approximately straight line in a second direction opposite to the preliminary direction,
repeatedly determining, with the electronic processor, the third strength of the wireless signal while the robotic garden tool is moving in the second direction along the second approximately straight line, and
controlling, with the electronic processor, operation of the at least one wheel motor to continue to move the robotic garden tool along the second approximately straight line in the second direction in response to determining that the third strength of the wireless signal is not decreasing as the robotic garden tool is moving in the second approximately straight line.

11. The method of claim 9, further comprising:
determining, with the electronic processor, that at least one of the first strength of the wireless signal and the second strength of the wireless signal is greater than a predetermined strength of wireless signal threshold;
in response to determining that the at least one of the first strength of the wireless signal and the second strength of the wireless signal is greater than the predetermined strength of wireless signal threshold, adjusting, with the electronic processor, an operating parameter of the robotic garden tool;
and optionally
wherein the operating parameter includes a speed at which the robotic garden tool travels through the operating area, and
wherein adjusting the operating parameter includes reducing, with the electronic processor, the speed at which the robotic garden tool travels through the operating area in response to determining that the at least one of the first strength of the wireless signal and the second strength of the wireless signal is greater than the predetermined strength of wireless signal threshold.

12. The method of claim 9, further comprising:
during operation in the operating area, determining, with the electronic processor, that the robotic garden tool should return to the docking station; and
in response to determining that the robotic garden tool should return to the docking station, determining, with the electronic processor, the first strength of the wireless signal while the robotic garden tool is located at the first position, and controlling, with the electronic processor, operation of the at least one wheel motor to move the robotic garden tool in the first approximately straight line, wherein the first approximately straight line is in a random direction.

13. The method of claim 9, further comprising:
during operation in the operating area, determining, with the electronic processor, that the robotic garden tool should return to the docking station; and
in response to determining that the robotic garden tool should return to the docking station,
controlling, with the electronic processor, operation of the at least one wheel motor to move the robotic garden tool in an approximately circular path,
repeatedly determining, with the electronic processor, a third strength of the wireless signal while the robotic garden tool is moving in the approximately circular path,
determining, with the electronic processor, at least one of a minimum level of the third strength of the wireless signal along the approximately circular path at a second position and a maximum level of the third strength of the wireless signal along the approximately circular path at a third position, and
controlling, with the electronic processor, operation of the at least one wheel motor to at least one of (i) turn the robotic garden tool approximately ninety degrees from the third position in a second direction that is opposite a first direction in which the robotic garden tool is turning in order to move in the approximately circular path, and move the robotic garden tool in the first approximately straight line, and (ii) turn the robotic garden tool approximately ninety degrees from the second position in the first direction, and move the robotic garden tool in the first approximately straight line.

14. The method of claim 9, further comprising:
during operation in the operating area, determining, with the electronic processor, that the robotic garden tool should return to the docking station;
in response to determining that the robotic garden tool should return to the docking station, determining, with the electronic processor, that the sensor is not currently receiving the wireless signal from the docking station;
in response to determining that the sensor is not currently receiving the wireless signal from the docking station, controlling, with the electronic processor, operation of the at least one wheel motor to at least one of (i) move in a random approximately straight line and (ii) continue movement control of the robotic garden tool that was being implemented before the electronic processor determined that the robotic garden tool should return to the docking station, until the electronic processor determines that the sensor is receiving the wireless signal from the docking station; and
in response to determining that the sensor is receiving the wireless signal from the docking station, determining, with the electronic processor, the first strength of the wireless signal while the robotic garden tool is located at the first position, and controlling, with the electronic processor, operation of the at least one wheel motor to move the robotic garden tool in the first approximately straight line.

15. A robotic garden tool comprising:
a housing;
a set of wheels coupled to the housing and configured to rotate to propel the robotic garden tool on an operating surface;
at least one wheel motor coupled to one or more wheels of the set of wheels, the at least one wheel motor configured to drive rotation of the one or more wheels;
a sensor configured to receive a wireless signal from a docking station, wherein the robotic garden tool is configured to dock at the docking station; and
an electronic processor in communication with the sensor and configured to control the robotic garden tool to move toward the docking station by
during operation in an operating area, determining that the robotic garden tool should return to the docking station, and
in response to determining that the robotic garden tool should return to the docking station,
controlling operation of the at least one wheel motor to move the robotic garden tool in an approximately circular path,
repeatedly determining a first strength of the wireless signal while the robotic garden tool is moving in the approximately circular path,
determining at least one of (i) a minimum level of the first strength of the wireless signal along the approximately circular path at a first position and (ii) a maximum level of the first strength of the wireless signal along the approximately circular path at a second position, and
controlling operation of the at least one wheel motor to at least one of (i) turn the robotic garden tool approximately ninety degrees from the second position in a second direction that is opposite a first direction in which the robotic garden tool is turning in order to move in the approximately circular path, and move the robotic garden tool in a first approximately straight line, and (ii) turn the robotic garden tool approximately ninety degrees from the first position in the first direction, and move the robotic garden tool in the first approximately straight line;
and optionally wherein the electronic processor is configured to:
repeatedly determine a second strength of the wireless signal as the robotic garden tool is moving in the first approximately straight line;
control operation of the at least one wheel motor to continue to move the robotic garden tool in the first approximately straight line in response to determining that the second strength of the wireless signal is not decreasing as the robotic garden tool is moving in the first approximately straight line;
determine at least one of (i) that the second strength of the wireless signal has begun decreasing as the robotic garden tool continues to move in the first approximately straight line and (ii) that the second strength of the wireless signal is greater than a predetermined strength of wireless signal threshold; and
in response to determining that at least one of (i) that the second strength of the wireless signal has begun decreasing as the robotic garden tool continues to move in the first approximately straight line and (ii) that the second strength of the wireless signal is greater than the predetermined strength of wireless signal threshold, adjusting at least one of an operating parameter and a movement pattern of the robotic garden tool.
